# EUROPEAN PATENT APPLICATION

(11) **EP 4 342 709 A1**
(43) Date of publication of application: **27.03.2024**
(21) Application number: 23198147.3
(22) Date of filing: 19.09.2023
(51) Int. Cl.: B60K 28/10

(54) **WORK VEHICLE**

(30) Priority: 21.09.2022 JP 2022149954
(71) Applicant: ISEKI & CO., LTD., Matsuyama-shi Ehime-ken 799-2692 (JP)
(72) Inventor: KINOSHITA, Kenro, Ehime-ken, 791-2193 (JP); HISAOKA, Yasuhiro, Ehime-ken, 791-2193 (JP)
(74) Representative: TBK

(57) **Abstract**

The invention provides a work vehicle with a high mowing work efficiency that does not require a restart of an engine when an advancing direction of the work vehicle is switched from a reverse direction to a forward direction. The work vehicle includes a work machine (4) that mows grass, and stops rotation of a mowing blade (48) of the work machine (4) when the reverse travel of the work vehicle is detected. The work vehicle includes a first switch (21) that causes the mowing blade (48) of the work machine (4) to rotate when the work vehicle travels in reverse. In the case where the work vehicle is switched from the reverse travel to travel other than the reverse travel after an on-signal of the first switch (21) is input, input of an on-signal of the first switch (21) is canceled.

## Description

### BACKGROUND OF THE INVENTION

### 1. Field of the Invention

The present invention relates to a work vehicle including a work machine that travels in a park or the like to mow a lawn or another plant in the park or the like.

### 2. Description of Related Art

The following technique has been known. When a work vehicle travels forward, output rotation of an engine is transmitted to a work machine and causes a mowing blade of the work machine to rotate and perform mowing work. When the work vehicle travels in reverse, and a work clutch that is provided to a transmission path between the engine and the work machine cannot be disengaged, the engine is stopped to stop the rotation of the mowing blade of the work machine. Examples of the related art include JP2020-96558A.

### SUMMARY OF THE INVENTION

However, in the technique disclosed in JP2020-96558A, when the work vehicle travels forward again, the engine has to be restarted, which possibly reduces a mowing work efficiency.

Therefore, a main object of the present invention is to provide a work vehicle with a high mowing work efficiency that does not require a restart of an engine when an advancing direction of the work vehicle is switched from a reverse direction to a forward direction.

The invention, which solves the above problem, is as follows.
(1) The invention is
   a work vehicle provided with a work machine (4) that mows grass, and
   stopping rotation of a mowing blade (48) of the work machine (4) when reverse travel of the work vehicle is detected, the work vehicle including:
      a first switch (21) that causes the mowing blade (48) of the work machine (4) to rotate when the work vehicle travels in reverse, in which
      in the case where the work vehicle is switched from the reverse travel to travel other than the reverse travel after an on-signal of the first switch (21) is input, input of the on-signal of the first switch (21) is canceled.
(2) The work vehicle as in (1) further includes:
   a second switch (22) that starts a drive device (E) driving the work vehicle, in which
   in the case where an on-signal of the second switch (22) is input after the on-signal of the first switch (21) is input, the input of the on-signal of the first switch (21) is canceled.
(3) The work vehicle as in (1) or (2) further includes:
   a third switch (23) that switches between driving and a stop of driving of the mowing blade (48), in which
   in the case where the third switch (23) stops driving of the mowing blade (48) after the on-signal of the first switch (21) is input, the input of the on-signal of the first switch (21) is canceled.
(4) The work vehicle as in any one of (1) to (3) further includes:
   a first accelerator pedal (31) that moves the work vehicle forward; and a second accelerator pedal (32) that moves the work vehicle in reverse, in which
   in the case where, after the on-signal of the first switch (21) is input, it is detected that the first accelerator pedal (31) is depressed, or it is detected that neither the first accelerator pedal (31) nor the second accelerator pedal (32) is depressed, the input of the on-signal of the first switch (21) is canceled.
(5) The work vehicle as in any one of (1) to (4) further includes:
   the first accelerator pedal (31) that moves the work vehicle forward; and the second accelerator pedal (32) that moves the work vehicle in reverse, in which
   when it is determined that a current state is a neutral state where neither the first accelerator pedal (31) moving the work vehicle forward nor the second accelerator pedal (32) moving the work vehicle in reverse is depressed, the mowing blade (48) rotates.

According to the invention, even when the work vehicle travels in reverse, the mowing blade (48) of the work machine (4) can rotate to mow a weed, and thus a mowing work efficiency can be improved.

It is also possible to prevent a worker from forgetting to cut off the input of the first switch (21), and stop the rotation of the mowing blade (48) at a restart of the drive device (E). In this way, mowing work can be performed further safely.

It is further possible to prevent the worker from forgetting to cut off the input of the first switch (21), and stop the rotation of the mowing blade (48) when driving of the mowing blade (48) is stopped by the third switch (23) . In this way, the mowing work can be performed further safely.

### BRIEF DESCRIPTION OF THE DRAWINGS

FIG. 1 is a left side view of a work vehicle;
FIG. 2 is a plan view of the work vehicle;
FIG. 3 is a front view of the work vehicle;
FIG. 4 is a plan view of a front panel;
FIG. 5 is a back view of an accelerator pedal;
FIG. 6 is a right side view of the accelerator pedal;
FIG. 7 is a transmission diagram of output rotation of the engine;
FIG. 8 is an electrical schematic diagram of a controller; and
FIG. 9 is an explanatory chart of a method for driving a work machine.

### DESCRIPTION OF EMBODIMENTS

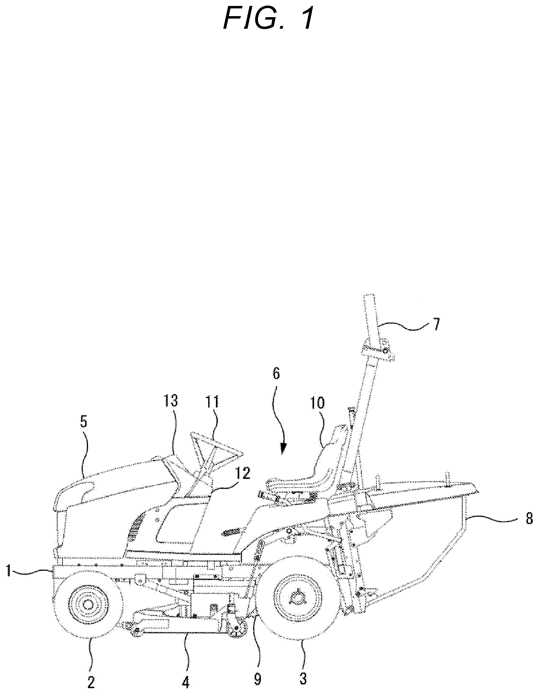

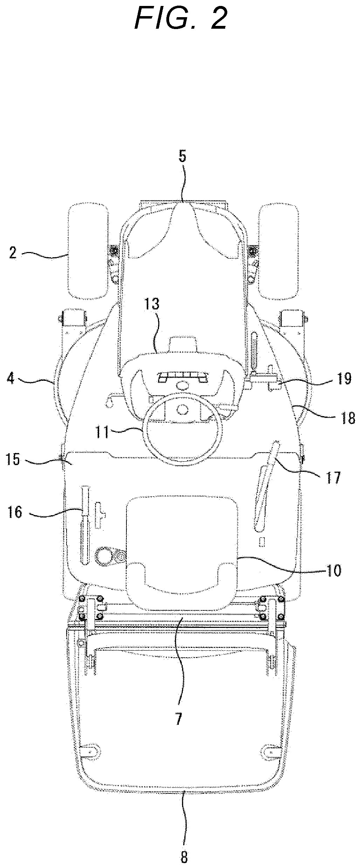

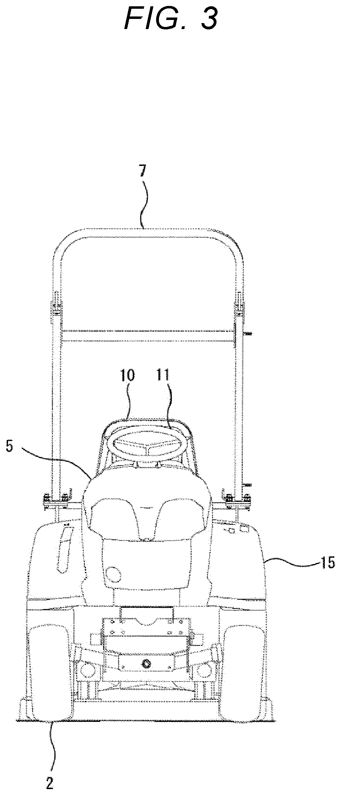

As illustrated in FIGS. 1 to 3, a work vehicle such as a tractor includes: a right and left pair of front wheels 2 in a front portion under a machine body frame 1; a right and left pair of rear wheels 3 in a rear portion under the machine body frame 1; and a work machine 4 that is provided between the front wheels 2 and the rear wheels 3 under the machine body frame 1 to mowing a lawn or the like.

The work vehicle further includes: a bonnet 5 that stores an engine E in a front portion above the machine body frame 1; an operation unit 6 that is provided behind the bonnet 5 and which a worker gets in; a safety frame 7 that is provided behind the control unit 6 to protect the worker; and a grass collection container 8 that is provided in a lower portion behind the safety frame 7 to store grass or the like mowed by the work machine 4. A shooter 9 communicates between a rear portion of the work machine 4 and a front portion of the grass collection container 8.

A steering wheel 11 is provided in front of an operator's seat 10 in the operation unit 6, and the steering wheel 11 is supported by a steering column 12 via a steering shaft (not illustrated). A dashboard 13 is formed above the steering column 12.

A cleaner lever 16 is provided on a fender 15 that is located on a left side of the operator's seat 10. A cleaner lever 16 drives a cleaner (not illustrated) that forcibly conveys the grass mowed by the work machine 4 to the grass collection container 8. A lift/lower lever 17 that lifts or lowers the work machine 4 is provided on a fender 15 that is located on a right side of the operator's seat 10.

An accelerator pedal 19 that moves the work vehicle forward or in reverse is provided on a floor 18 that is located on the right side of the steering column 12.

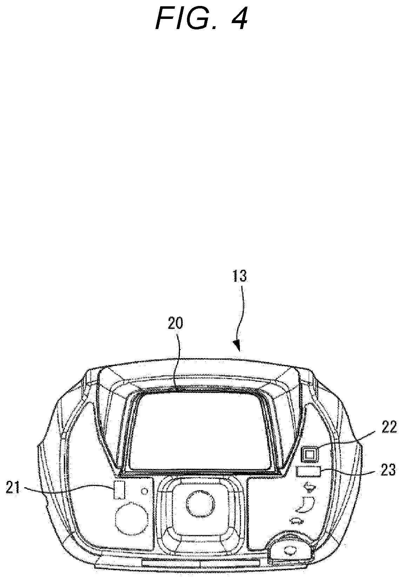

As illustrated in FIG. 4, a meter panel 20 is provided to a central portion of the dashboard 13 and displays an output speed of the engine E and the like. A restriction cancellation switch (the "first switch" in the claims) 21 is provided on a rear left side of the meter panel 20. The restriction cancellation switch 21 cancels a restriction function that stops and restricts driving of the work machine 4 when the work vehicle travels in reverse. A restart switch 22 to restart the engine E and a start switch 23 to start the work machine 4 are provided on a rear right side of the meter panel 20.

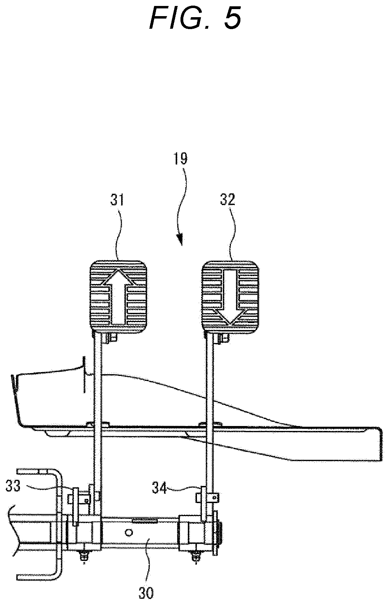

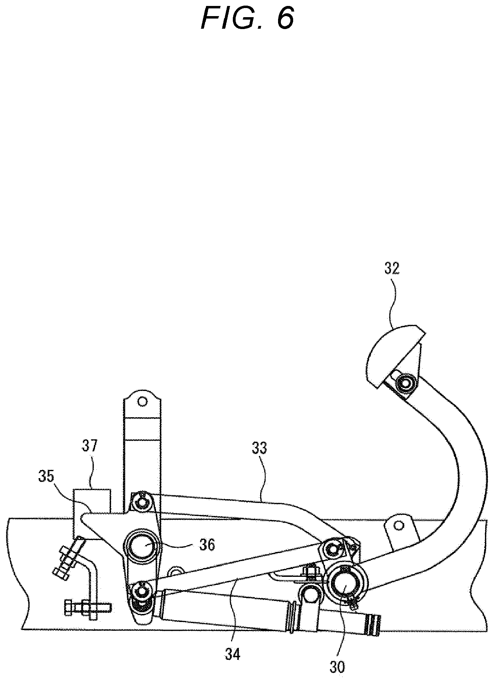

As illustrated in FIGS. 5 and 6, the accelerator pedal 19 includes a forward accelerator pedal (the "first accelerator pedal" in the claims) 31 and a reverse accelerator pedal (the "second accelerator pedal" in the claims) 32, each of which is supported by a support shaft 30 extending in a right-left direction. The forward accelerator pedal moves the work vehicle forward, and the reverse accelerator pedal 32 moves the work vehicle in reverse.

When the forward accelerator pedal 31 is depressed, a rotary shaft 36 rotates in a clockwise direction via a forward arm 33 and a rotary body 35. The forward arm 33 is coupled to a base portion of the forward accelerator pedal 31, and the rotary body 35 is supported by the rotary shaft 36. Meanwhile, when the reverse accelerator pedal 32 is depressed, the rotary shaft 36 rotates in a counterclockwise direction via a reverse arm 34 and the rotary body 35. The reverse arm 34 is coupled to a base portion of the reverse accelerator pedal 32, and the rotary body 35 is supported by the rotary shaft 36. A rotation angle of the rotary shaft 36 is measured by an angle sensor 37 that is arranged near the rotary shaft 36. In the present specification, a state where neither the forward accelerator pedal 31 nor the reverse accelerator pedal 32 is depressed will be referred to as a neutral state. In the neutral state, the work vehicle travels neither forward nor in reverse.

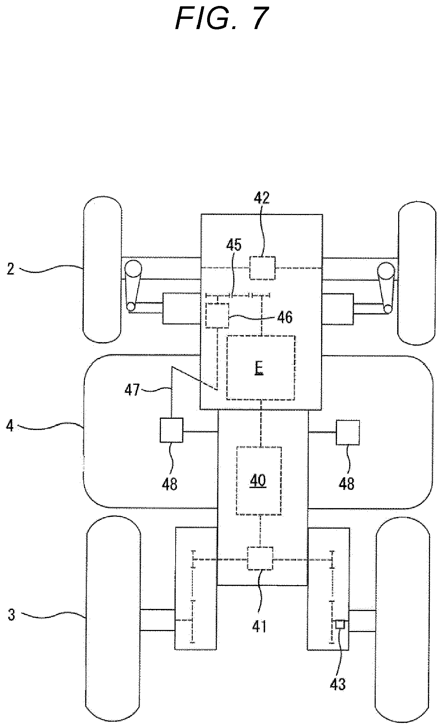

As illustrated in FIG. 7, output rotation of the engine E is transmitted to a continuously variable transmission 40. The output rotation, the number of which is increased, reduced, or the like by the continuously variable transmission 40, is transmitted to the right and left pair of the rear wheels 3 via a differential gear 41 for rear wheels. A rotational speed of each of the rear wheels 3 is measured by a speed sensor 43. The output rotation of the continuously variable transmission 40 is also transmitted to the right and left pairs of the front wheels 2 via a differential gear 42 for front wheels when a drive switching device (not illustrated) is switched from two-wheel drive to four-wheel drive.

The output rotation of the engine E is transmitted to a work clutch 46 via a speed increasing gear 45. When the work clutch 46 is engaged, the output rotation of the engine E is also transmitted to a right and left pair of mowing blades 48, which are installed in the work machine 4, via the work clutch 46 and a work rotary shaft 47. In this way, the mowing blades 48 can rotate to mow the lawn or the like. In addition, wind generated by the rotation of the mowing blades 48 efficiently conveys the residual mowed grass in the shooter 9 to the grass collection container 8. When the work clutch 46 is disengaged, the output rotation of the engine E is not transmitted to the mowing blades 48 of the work machine 4, and the mowing blades 48 are stopped. Thus, it is possible to improve safety at the time when the reverse accelerator pedal 32 is depressed to move the work vehicle in reverse.

When the start switch 23 is input, the work clutch 46 is engaged. When the input of the start switch 23 is cut off, the work clutch 46 is disengaged. When the work vehicle attempts to travel in reverse while the work clutch 46 is engaged, the work clutch 46 is disengaged. However, in the case where the restriction cancellation switch 21 is input, the work clutch 46 remains engaged even when the work vehicle travels in reverse.

Even in the case where the restriction cancellation switch 21 is input and the work clutch 46 is engaged, the input of the restriction cancellation switch 21 is cut off, and the work clutch 46 is disengaged in the following cases. The cases are that a restart switch (the "second switch" in the claims) 22 is input to restart the engine E, that the work clutch 46 is disengaged, and that the forward accelerator pedal 31 is depressed to move the work vehicle forward. In this way, it is possible to maintain a high level of the safety even when the worker forgets to cut off the input of the restriction cancellation switch 21.

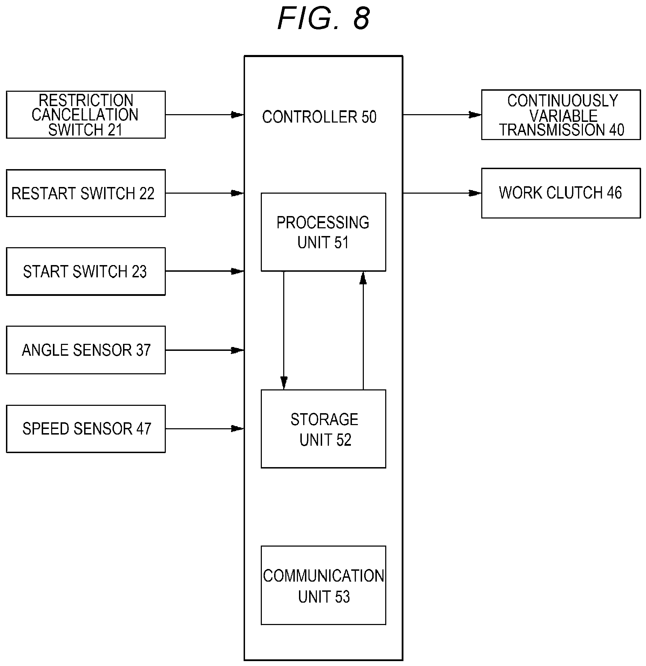

As illustrated in FIG. 8, a controller 50 includes: a processing unit 51 including a CPU and the like; a storage unit 52 including ROM, RAM, a hard disk drive, flash memory, or the like; and a communication unit 53 for data communication with outside.

The processing unit 51 calculates a travel speed of the work vehicle on the basis of a measured value by the speed sensor 43, and the like.

The storage unit 52 stores a set speed, set time, and the like that are input on the meter panel 20.

The communication unit 53 transmits information on the travel speed of the work vehicle and the like to an external portable controller.

The restriction cancellation switch 21, the restart switch 22, the start switch (the "third switch" in the claims) 23, the angle sensor 37, and the speed sensor 43 are connected to an input side of the controller 50 via a predetermined input interface circuit. The restriction cancellation switch 21 cancels the restriction function that stops and restricts driving of the work machine 4 when the work vehicle travels in reverse. The restart switch 22 restarts the engine E, and the start switch 23 starts the work machine 4. The angle sensor 37 measures the rotation angle of the rotary shaft 36 that rotates by the depression of the forward accelerator pedal 31 or the reverse accelerator pedal 32. The speed sensor 43 measures the rotation speed of each of the rear wheels 3.

The continuously variable transmission 40 and an alarm switch 63 are connected to an output side of the controller 50 via a predetermined output interface circuit. The continuously variable transmission 40 increases or reduces the number of the output rotation of the engine E. The alarm switch 63 is used by the work clutch 46, which is arranged in the transmission path between the engine E and the work machine 4, to sound an alarm.

### <Method for Starting Work Machine>

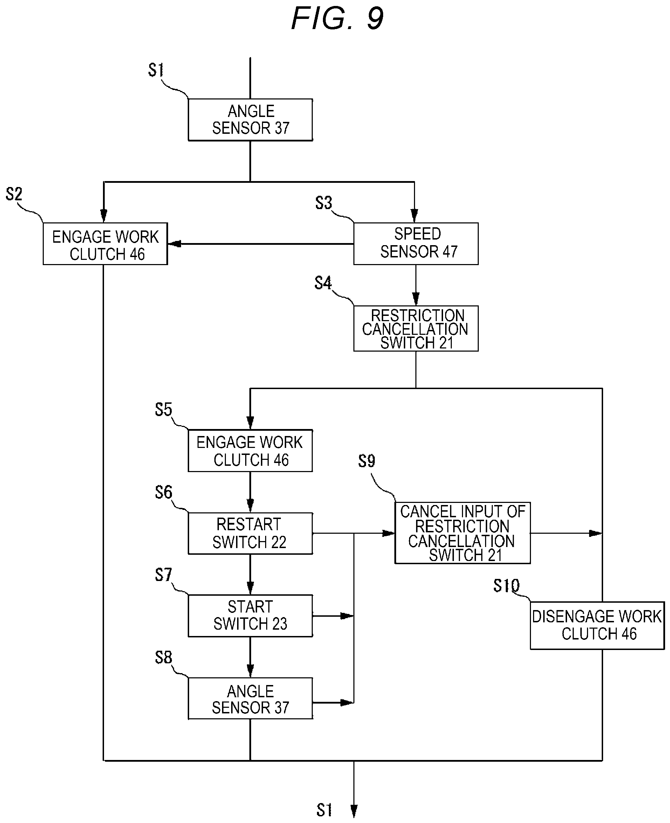

As illustrated in FIG. 9, in step S1 in which the work clutch 46 is engaged and the mowing blades 48 of the work machine 4 rotate, the processing unit 51 of the controller 50 determines the measured value by the angle sensor 37 that measures the rotation angle of the rotary shaft 36. If it is determined that a current state is either a forward travel state where the forward accelerator pedal 31 is depressed and the work vehicle travels forward or the neutral state where neither the forward accelerator pedal 31 nor the reverse accelerator pedal 32 is depressed, the processing proceeds to step S2. If it is determined that the current state is a reverse travel state where the reverse accelerator pedal 32 is depressed and the work vehicle travels in reverse, the processing proceeds to step S3.

In step S2, the processing unit 51 maintains the engagement of the work clutch 46, and then the processing returns to step S1.

In step S3, the processing unit 51 determines the measured value by the speed sensor 43 that measures the rotational speed of each of the rear wheels 3. If the rotational speed of each of the rear wheels 3 is lower than or equal to the set speed that is input in advance on the meter panel 20, the processing returns to S2. If the rotational speed of each of the rear wheels 3 is higher than the set speed, the processing proceeds to step S4.

In step S4, the processing unit 51 determines an input state of the restriction cancellation switch 21, which cancels the restriction function of disengaging the work clutch 46 and restricting the engagement of the work clutch 46. If it is determined that the restriction cancellation switch 21 is input, the processing proceeds to step S5. If it is determined that the restriction cancellation switch 21 is not input, the processing proceeds to step S10.

In step S5, the processing unit 51 maintains the engagement of the work clutch 46, and then the processing proceeds to step S6. In this way, even when the work vehicle travels in reverse, the mowing blades 48 of the work machine 4 can rotate to mow the lawn or the like, and thus mowing work efficiency can be improved. In addition, the wind generated by the rotation of the mowing blades 48 is blown into the shooter 9, which communicates between the rear portion of the work machine 4 and the front portion of the grass collection container 8. In this way, the residual mowed grass in the shooter 9 can be conveyed to the grass collection container 8.

In step S6, the processing unit 51 determines an input state of the restart switch 22, which stops the engine E once and then restarts the engine E. If it is determined that the restart switch 22 is not input, the processing proceeds to step S7. If it is determined that the restart switch 22 is input, the processing proceeds to step S9.

In step S7, the processing unit 51 determines an input state of the start switch 23, which engages or disengages the work clutch 46. If it is determined that the start switch 23 is input and the engagement of the work clutch 46 is maintained, the processing proceeds to step S8. If it is determined that the start switch 23 is not input and it is attempted to disengage the work clutch 46, the processing proceeds to step S9.

In step S8, the processing unit 51 determines the measured value by the angle sensor 37 that measures the rotation angle of rotary shaft 36. If it is determined that the current state is the reverse travel state where the reverse accelerator pedal 32 is depressed and the work vehicle travels in reverse, the processing returns to step S1. If it is determined that the current state is either the forward travel state where the forward accelerator pedal 31 is depressed and the work vehicle travels forward or the neutral state where neither the forward accelerator pedal 31 nor the reverse accelerator pedal 32 is depressed, the processing proceeds to step S9.

In step S9, the processing unit 51 cancels the input of the restriction cancellation switch 21, and the processing proceeds to step S10. In this way, it is possible to prevent the worker from forgetting to cut off the input of the restriction cancellation switch 21. Thus, it is possible to disengage the work clutch 46, stop the rotation of the mowing blades 48 of the work machine 4, and thereby improve the work safety when the engine E is restarted, when the work clutch 46 is disengaged, when the work vehicle travels forward, or the like.

In step S10, the processing unit 51 disengages the work clutch 46, and then the processing returns to step S1. In this way, it is possible to stop the rotation of the mowing blades 48 of the work machine 4 when the work vehicle travels in reverse. Thus, the work safety can be improved. The work clutch 46 is preferably disengaged after a predetermined time elapses. In this way, the wind generated by the rotation of the mowing blades 48 can convey the residual mowed grass in the shooter 9 to the grass collection container 8.
The invention provides a work vehicle with a high mowing work efficiency that does not require a restart of an engine when an advancing direction of the work vehicle is switched from a reverse direction to a forward direction. The work vehicle includes a work machine (4) that mows grass, and stops rotation of a mowing blade (48) of the work machine (4) when the reverse travel of the work vehicle is detected. The work vehicle includes a first switch (21) that causes the mowing blade (48) of the work machine (4) to rotate when the work vehicle travels in reverse. In the case where the work vehicle is switched from the reverse travel to travel other than the reverse travel after an on-signal of the first switch (21) is input, input of an on-signal of the first switch (21) is canceled.

## Claims

1. A work vehicle provided with a work machine (4) that mows grass, and
stopping rotation of a mowing blade (48) of the work machine (4) when reverse travel of the work vehicle is detected, the work vehicle comprising:
a first switch (21) that causes the mowing blade (48) of the work machine (4) to rotate when the work vehicle travels in reverse, wherein
in the case where the work vehicle is switched from the reverse travel to travel other than the reverse travel after an on-signal of the first switch (21) is input, input of the on-signal of the first switch (21) is canceled.

2. The work vehicle according to claim 1 further comprising:
a second switch (22) that starts a drive device (E) driving the work vehicle, wherein
in the case where an on-signal of the second switch (22) is input after the on-signal of the first switch (21) is input, the input of the on-signal of the first switch (21) is canceled.

3. The work vehicle according to claim 1 or claim 2 further comprising:
a third switch (23) that switches between driving and stop of driving of the mowing blade (48), wherein
in the case where the third switch (23) stops driving of the mowing blade (48) after the on-signal of the first switch (21) is input, the input of the on-signal of the first switch (21) is canceled.

4. The work vehicle according to any one of claim 1 to claim 3 further comprising:
a first accelerator pedal (31) that moves the work vehicle forward; and a second accelerator pedal (32) that moves the work vehicle in reverse, wherein
in the case where, after the on-signal of the first switch (21) is input, it is detected that the first accelerator pedal (31) is depressed, or it is detected that neither the first accelerator pedal (31) nor the second accelerator pedal (32) is depressed, the input of the on-signal of the first switch (21) is canceled.

5. The work vehicle according to any one of claim 1 to claim 4 further comprising:
the first accelerator pedal (31) that moves the work vehicle forward; and the second accelerator pedal (32) that moves the work vehicle in reverse, wherein
when it is determined that a current state is a neutral state where neither the first accelerator pedal (31) moving the work vehicle forward nor the second accelerator pedal (32) moving the work vehicle in reverse is depressed, the mowing blade (48) rotate.
